## Europäisches Patentamt

## European Patent Office

## Office européen des brevets

(11) Veröffentlichungsnummer: **0 070 451**
**B1**

(12) **EUROPÄISCHE PATENTSCHRIFT**

(45) Veröffentlichungstag der Patentschrift:
**16.10.85**

(51) Int. Cl.⁴: **C 09 D 17/00**

(21) Anmeldenummer: **82106044.9**

(22) Anmeldetag: **07.07.82**

(54) **Verfahren zur Herstellung von wässrigen Suspensionen von feinteiligem Titandioxyd.**

(30) Priorität: **18.07.81 DE 3128477**

(43) Veröffentlichungstag der Anmeldung:
**26.01.83 Patentblatt 83/4**

(45) Bekanntmachung des Hinweises auf die Patenterteilung:
**16.10.85 Patentblatt 85/42**

(84) Benannte Vertragsstaaten:
**BE CH DE FR GB IT LI NL**

(56) Entgegenhaltungen:
**EP - A - 0 044 475**
**CH - A - 386 693**

(73) Patentinhaber: **BASF Aktiengesellschaft,
Carl-Bosch-Strasse 38, D-6700 Ludwigshafen (DE)**

(72) Erfinder: **Belde, Horst, Dubliner Strasse 21,
D-6700 Ludwigshafen (DE)**
Erfinder: **Langenfelder, Hans, Paul-Martin-Ufer 25,
D-6800 Mannheim (DE)**
Erfinder: **Hoerauf, Werner, Dr., Homburger Strasse 10,
D-6700 Ludwigshafen (DE)**

## Beschreibung

Zur Herstellung von mattglänzenden Fäden aus Polycaprolactam wird mit Titandioxid mattiertes Polycaprolactam verwendet. Hierzu wird feinverteiltes Titandioxid bei der Herstellung von Polycaprolactam in die polymerisierende Schmelze eingebracht. Wie aus «Klare, synthetische Fasern aus Polyamiden», Akademieverlag Berlin, 1963, Seite 170, hervorgeht, treten hierbei jedoch erhebliche Schwierigkeiten durch Ausflocken des Titandioxids auf. Es wurde schon versucht, diese Schwierigkeiten durch Zusatz von Dispergiermitteln zu beheben. Entsprechend dem in der CH-PS 386 693 beschriebenen Verfahren soll ein Pigment zunächst zusammen mit Wasser und einem Dispergiermittel in Form einer dünnflüssigen Paste homogenisiert werden. Anschliessend wird die homogenisierte Paste in einer wässrigen Lösung von Caprolactam zerteilt. Mit der Entwicklung der Schnellspinntechnologie werden in zunehmendem Masse höhere Ansprüche an die Verteilung des Titandioxids und dessen Feinkörnigkeit gestellt. Nach den bisherigen Arbeitsweisen ist es nicht gelungen, Sekundäragglomerate aus Titandioxid vollständig zu entfernen. Solche Sekundäragglomerate lassen sich z.B. durch Filtration oder Sedimentation nicht beseitigen. Hierdurch treten Ungleichmässigkeiten und Fadenbrüche in den mattierten Polyamidfäden beim Spinnen auf.

Es war deshalb die technische Aufgabe gestellt, wässrige Suspensionen von feinteiligem Titandioxid zur Verfügung zu stellen, die sich leicht in der Polymerschmelze verteilen lassen und die keine Sekundäragglomerate enthalten, die zu Fadenbrüchen führen.

Diese Aufgabe wird gelöst in einem Verfahren zur Herstellung von wässrigen Suspensionen von feinteiligem Titandioxid unter Mitverwendung von Caprolactam, wobei man Titandioxidpulver mit Caprolactam trocken bei 15 bis 40 °C verknetet, das so erhaltene Gemisch unter Zusatz von Wasser verknetet und die so erhaltene Paste in Wasser suspendiert, dann sedimentiert und feinteiliges Titandioxid enthaltende Suspensionen abdekantiert.

Das neue Verfahren hat den Vorteil, dass man Sekundäragglomerate von Titandioxid, die zu Fadenbrüchen führen, weitgehend ausschliesst. Ferner hat das neue Verfahren den Vorteil, dass man auf einfache Weise feinverteiltes Titandioxid erhält, das sich leicht in hoher Konzentration, in der Polycaprolactamschmelze verteilen lässt.

Erfindungsgemäss geht man von Titandioxidpulver in Form von Rutil oder Anatas, vorzugsweise Anatas aus. Vorteilhaft hat das Titandioxidpulver eine Korngrösse kleiner 10 µm, insbesondere 0,1 bis 5 µm. Titandioxidpulver wird mit Caprolactam trocken bei 15 bis 40 °C verknetet. Vorteilhaft hält man eine Temperatur von 20 bis 30 °C ein. In der Regel wendet man je Gewichtsteil Titandioxid 0,15 bis 0,35, insbesondere 0,2 bis 0,3 Gewichtsteile Caprolactam an. Das Verkneten erfolgt in an sich bekannten Knetvorrichtungen wie Doppelschaufelknetern z.B. für eine Dauer von 1 bis 3 Stunden. Es hat sich ferner als vorteilhaft erwiesen, zur Stabilisierung zusätzlich 0,1 bis 0,3 Gew.-% Alkalisalze der Phosphorsäure, wie Di-Natriumphosphat, bezogen auf Titandioxid, zuzusetzen.

Das so erhaltene Gemisch aus Titandioxid und Caprolactam wird unter Zusatz von Wasser zu einer Paste verknetet. Vorteilhaft hält man hierbei eine Temperatur von 15 bis 40 °C ein. In der Regel setzt man je Gewichtsteil Titandioxid 0,1 bis 0,3 Gew.-Teile Wasser zu. Das Verkneten erfolgt auf den an sich bekannten Knetvorrichtungen wie oben beschrieben.

Die so erhaltene Paste, die im wesentlichen aus Titandioxid, Caprolactam, Wasser und gegebenenfalls Alkaliphosphat besteht, wird mit Wasser suspendiert. Vorteilhaft wendet man soviel Wasser an, dass eine 8 bis 12 Gew.-% Titandioxid enthaltende wässrige Suspension erhalten wird. Das Suspendieren erfolgt vorteilhaft bei einer Temperatur von 15 bis 40 °C in an sich bekannter Weise durch Rühren und/oder Umpumpen des Gemisches. Anschliessend lässt man die wässrige Suspension sedimentieren. Hierbei hält man vorteilhaft eine Temperatur von 15 bis 40 °C ein. In der Regel dauert die Sedimentation 12 bis 48 Stdn. Hierbei setzen sich grobkörnige Titandioxid-Teilchen am Boden ab. Zweckmässig wird die Sedimentation in einem unten konisch zulaufenden Behälter durchgeführt. Anschliessend wird die feinteiliges Titandioxid enthaltende wässrige Suspension von dem abgesetzten Anteil abdekantiert.

Man erhält eine wässrige Suspension von 8 bis 12 Gew.-% Titandioxid mit einer Korngrösse kleiner 1 µ, insbesondere 0,1 bis 0,9 µ, die zudem 0,8 bis 4,8 Gew.-% Caprolactam und gegebenenfalls 0,008 bis 0,036 Gew.-% Alkalisalze der Phosphorsäure enthält.

Die erfindungsgemäss erhaltene wässrige Suspension von Titandioxid eignet sich zum Mattieren von Polycaprolactamschmelzen oder zur Herstellung von Titandioxidkonzentraten in Polycaprolactam.

Das Verfahren nach der Erfindung sei an folgendem Beispiel veranschaulicht.

Beispiel

In einem Kneter werden 275 kg Titandioxid (Anatas) der Korngrösse 0,1 bis 5 µ und 68 kg Caprolactam bei einer Temperatur von 20 °C 2 Stunden geknetet. Anschliessend werden 60 kg vollentsalztes Wasser und 0,1 Gew.-% Di-Natriumphosphat $\times$ 12 $H_2O$ (bezogen auf Titandioxid) zugegeben und weiter 2 Std. geknetet. Die erhaltene 68 gew.-%ige Paste wird mit 2000 l vollentsalztem Wasser aus dem Kneter über einen Turbomischer in einen Behälter gespült und zur Homogenisierung 1 Std. im Kreis gepumpt. Anschliessend lässt man 48 Stunden stehen zum Zwecke der Sedimentation von Agglomeraten und grösseren Titandioxid-Teilchen. Daraufhin wird vom abgesetzten Anteil Titandioxid abdekantiert. Die erhaltene wässrige Suspension enthält etwa 10 Gew.-% Titandioxid einer Korngrösse von 0,1 bis 0,9 μ.

## Patentansprüche

1. Verfahren zur Herstellung von wässrigen Suspensionen von feinteiligem Titandioxid unter Mitverwendung von Caprolactam, dadurch gekennzeichnet, dass man Titandioxidpulver mit Caprolactam trocken bei 15 bis 40 °C verknetet, das so erhaltene Gemisch unter Zusatz von Wasser verknetet und die so erhaltene Paste in Wasser suspendiert, dann sedimentiert und die feinteiliges Titandioxid enthaltende Suspension abdekantiert.

2. Verfahren nach Anspruch 1, dadurch gekennzeichnet, dass man je Gewichtsteil Titandioxid, 0,15 bis 0,35 Gew.-% Caprolactam mitverwendet.

3. Verfahren nach Ansprüchen 1 und 2, dadurch gekennzeichnet, dass man 0,1 bis 0,3 Gew.-% Alkalisalze der Phosphorsäure, bezogen auf Titandioxid, mitverwendet.

## Revendications

1. Procédé de préparation de suspensions aqueuses de bioxyde de titane en fines particules avec utilisation concomitante de caprolactame, caractérisé en ce que l'on malaxe le bioxyde de titane pulvérulent et la caprolactame à sec, entre 15 et 40°C, puis le mélane formé avec de l'eau, on met la pâte obtenue en suspension dans de l'eau, laisse sédimenter et décante la suspension de bioxyde de titane en fines particules surnageante.

2. Procédé suivant la revendication 1, caractérisé en ce que, par partie en poids de bioxyde de titane, on emploie 0,15 à 0,35 partie en poids de caprolactame.

3. Procédé suivant les revendications 1 et 2, caractérisé en ce que l'on emploie en outre 0,1 à 0,3% du poids du bioxyde de titane de sels de métaux alcalins de l'acide phosphorique.

## Claims

1. A process for the production of an aqueous suspension of finely divided titanium dioxide, co-using caprolactam, wherein titanium dioxide powder and caprolactam are kneaded together in the dry state at from 15 to 40 °C, the resulting mixture is kneaded with the addition of water, the paste thus obtained is suspended in water, the suspension is then allowed to sediment, and the resulting suspension containing finely divided titanium dioxide is decanted.

2. A process as claimed in claim 1, wherein from 0.15 to 0.35 part by weight of caprolactam is co-used per part by weight of titanium dioxide.

3. A process as claimed in claims 1 and 2, wherein from 0.1 to 0.3% by weight, based on titanium dioxide, of an alkali metal phosphate is co-used.